# EUROPÄISCHE PATENTSCHRIFT

(11) **EP 0 452 658 B1**
(45) Veröffentlichungstag und Bekanntmachung des Hinweises auf die Patenterteilung: **09.11.1994**
(21) Anmeldenummer: 91103354.6
(22) Anmeldetag: 06.03.1991
(51) Int. Cl.: H04L 12/28

(54) **Anschlusseinrichtung für die Hausleittechnik**
Connection unit for domestic applications
Unité de connexion pour installations domestiques

(30) Priorität: 03.04.1990 DE 4010699; 19.06.1990 DE 4019465
(43) Veröffentlichungstag der Anmeldung: 23.10.1991
(73) Patentinhaber: GEBRÜDER MERTEN GMBH & CO. KG, D-51643 Gummersbach (DE)
(72) Erfinder: Kind, Guntram, W-5270 Gummersbach (DE); Dorau, Joachim, W-5060 Bergisch Gladbach 2 (DE); Kürten, Roland, W-5272 Wipperfürth (DE); Stefanski, Manfred, W-5270 Gummersbach (DE)
(74) Vertreter: Selting, Günther, Dipl.-Ing.

(56) Entgegenhaltungen:
- EP-A- 0 344 609
- DE-A- 3 623 805
- FR-A- 2 457 586

## Beschreibung

Die Erfindung betrifft eine Anschlußeinrichtung für die Hausleittechnik der im Oberbegriff des Patentanspruchs 1 angegebenen Art.

Aus EP-A- 344 609 ist ein digitales Signalübertragungssystem für die Hausleittechnik bekannt, bei dem Datentelegramme zwischen verschiedenen im Gebäude installierten Anschlußeinheiten oder zwischen jeder Anschlußeinheit und einer Zentraleinheit übertragen werden können. Die Datenübertragung erfolgt zum Zwecke des Schaltens, Steuerns, Regelns, Messens und/oder Überwachens, wobei die Anschlußeinheiten die Funktion von Eingabe- und/oder Ausgabeeinheiten haben können. An die Anschlußeinheiten können externe elektrische Geräte, Melder oder Funktionsgeber angeschlossen werden. Die Anschlußeinheit ermöglicht die Kommunikation des externen Geräts mit dem Hausleitsystem. Da für unterschiedliche externe Geräte funktionsspezifische Anschlußeinheiten benötigt werden, ist zur Vereinheitlichung des in dem Gebäude zu installierenden Systems vorgesehen, daß jede Anschlußeinheit aus einer Busankopplungseinheit und einem Adapter besteht. Die Busankopplungseinheiten sind hardwaremäßig untereinander gleich aufgebaut, so daß bei der Installation des Systems an jeder Anschlußstelle zunächst nur eine Busankopplungseinheit, die einen Mikroprozessor enthält, zu installieren ist. Diese Busankopplungseinheit wird mit einem funktionsspezifischen Adapter verbunden, der die Anschlußeinheit komplettiert und ihr dasjenige Verhalten vermittelt, das für die Kommunikation mit einem bestimmten externen Gerätetyp erforderlich ist. Bei dem bekannten Hausleitsystem wird jeweils einer Busankopplungseinheit ein einziger Adapter zugeordnet. Dies führt dazu, daß eine große Vielzahl kompletter Anschlußeinheiten im Gebäude eingerichtet werden muß, von denen jede eine Busankopplungseinheit und einen Adapter enthält. Hierdurch kann das gesamte Hausleitsystem sehr aufwendig werden.

Der Erfindung liegt die Aufgabe zugrunde, eine Anschlußeinrichtung der im Oberbegriff des Patentanspruchs 1 angegebenen Art zu schaffen, die imstande ist, mehrere Funktionen auszuführen und die bezüglich der Anzahl der auszuführenden Funktionen erweitert werden kann.

Die Lösung dieser Aufgabe erfolgt erfindungsgemäß mit den im kennzeichnenden Teil des Patentanspruchs 1 angegebenen Merkmalen.

Bei der erfindungsgemäßen Anschlußeinrichtung sind die Kommunikationsleitungen, die die Busankopplungseinheit mit dem Adapter verbinden, durch die gesamte Adaptereinheit hindurchgeführt und mit mindestens einer weiteren Adaptereinheit, die mit derselben Busankopplungseinheit kommuniziert, verbunden. Auf diese Weise durchlaufen die Kommunikationsleitungen einer Busankopplungseinheit mehrere Adaptereinheiten, wo sie mit dem zugehörigen Adapter verbunden werden können. Die Busankopplungseinheit bildet den Grundbaustein für die Anschlußeinheit, die mehrere Adaptereinheiten aufweist. Jede der Adaptereinheiten ist funktionsspezifisch ausgebildet, d.h. sie hat die Funktion eines Schalters, Meßgerätes, einer Anzeigeeinrichtung oder irgendeine andere Funktion für die Eingabe oder Ausgabe von Signalen. Dadurch, daß die Kommunikationsleitungen alle Adaptereinheiten durchziehen, kann die einzige Busankopplungseinheit mit jedem in den Adaptereinheiten enthaltenen Adapter kommunizieren. Es ist daher nicht erforderlich, jeweils ein Paar aus Busankopplungseinheit und Adaptereinheit zusammenzustellen. Hierdurch wird der Aufwand für eine Anschlußeinrichtung wesentlich verringert. Außerdem können auf einfache Weise Erweiterungen der Anschlußeinrichtung durchgeführt werden, indem zusätzliche Adaptereinheiten angeschlossen werden.

Die erfindungsgemäße Anschlußeinrichtung ist zweckmäßigerweise so ausgebildet, daß sie den üblichen Installationssystemen für den Anschluß an das Stromversorgungsnetz angepaßt ist. Dies bedeutet, daß die Anschlußeinrichtung mit ähnlichen Gehäusen oder Installationsdosen ausgestattet ist wie sie in der Stromversorgungstechnik benutzt werden, wobei insbesondere gleiche Rasterabmessungen vorhanden sind. Die Anschlußeinrichtung kann als Aufputz-Gerät oder als Unterputz-Gerät ausgeführt sein. Bei der Aufputz-Ausführung sind mehrere Adapter in separaten Gehäusen vorhanden, die mit mehrpoligen Steckverbindern aneinandergesteckt werden können. Dabei sind auf entgegengesetzten Gehäuseseiten zueinander komplementäre mehrpolige Steckverbinder vorhanden. Beim Zusammenstecken mehrerer Gehäuse werden über die Steckverbinder die Kommunikationsleitungen durchverbunden. Die Gehäusekette enthält entweder in einer Adaptereinheit oder in einem separaten Gehäuse die Busankopplungseinheit, während die übrigen Adaptereinheiten ausschließlich Adapter enthalten.

Bei der Unterputz-Version sind gemäß einer bevorzugten Ausführung der Erfindung die Adaptereinheiten auf Montageplatten angebracht und über Putz angeordnet, während die Busankopplungseinheit in einer Unterputz-Installationsdose enthalten ist. Während eine der Einheiten teilweise in der Wand versenkt ist, sind die übrigen Adaptereinheiten flach auf der Wand montiert, so daß hierfür keine Installationsdosen erforderlich sind.

Die Kommunikation zwischen der Busankopplungseinheit und den einzelnen Adaptern kann über eine Vielzahl von Kommunikationsleitungen erfolgen. Die Anzahl der Kommunikationsleitungen kann dadurch reduziert werden, daß die Kommunikation im Zeitmultiplex-Betrieb erfolgt, wobei jedem Adapter ein bestimmtes Zeitfenster zugeordnet ist.

Der Leitungszug der Kommunikationsleitungen kann als flexible Streifenleitung ausgebildet sein, die sich über mehrere Adaptereinheiten hinweg erstreckt und die in jeder Adaptereinheit dadurch angezapft werden kann, daß die betreffenden Streifenleiter mit einer Kontaktvorrichtung angestochen werden.

Im folgenden werden unter Bezugnahme auf die Zeichnungen Ausführungsbeispiele der Erfindung näher erläutert.

Es zeigen:
- Fig. 1: eine perspektivische Darstellung einer Anschlußeinrichtung in Aufputz-Ausführung,
- Fig. 2: ein Blockschaltbild der Anschlußeinrichtung nach Fig. 1,
- Fig. 2a: ein Blockschaltbild einer abgewandelten Ausführungsform der Anschlußeinrichtung nach Fig. 2,
- Fig. 3: eine Schnittdarstellung einer Anschlußeinrichtung in Unterputz-Ausführung,
- Fig. 4: eine Draufsicht der Anschlußeinrichtung von Fig. 3,
- Fig. 5: die Anschlußeinrichtung nach Fig. 3 im fertigmontierten Zustand,
- Fig. 6: eine Draufsicht auf die Anschlußeinrichtung nach Fig. 5, jedoch ohne die die Adaptereinheiten bedeckenden Kappen,
- Fig. 7: eine Schnittdarstellung einer weiteren Anschlußeinrichtung in Unterputz-Ausführung,
- Fig. 8: eine Draufsicht der Anschlußeinrichtung nach Fig. 7,
- Fig. 9: eine weitere Ausführungsform einer Anschlußeinrichtung im Schnitt,
- Fig. 10: eine Draufsicht auf die Anschlußeinrichtung von Fig. 9 bei abgenommenem Deckel, der auch die Adaptereinheit enthält und
- Fig. 11: eine vergrößerte Darstellung der Einzelheit XI aus Fig. 9.

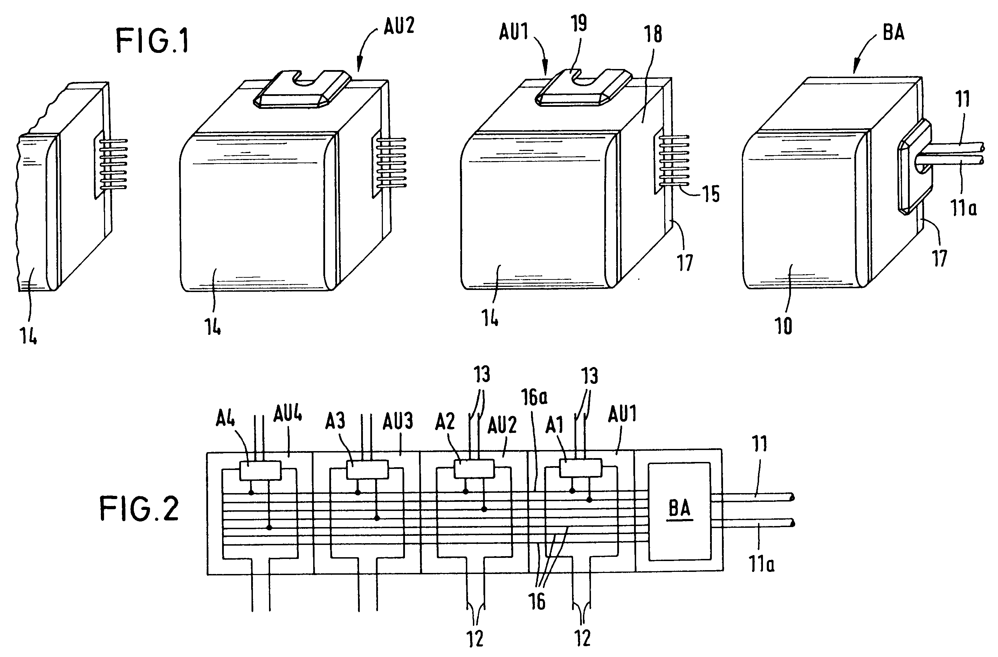

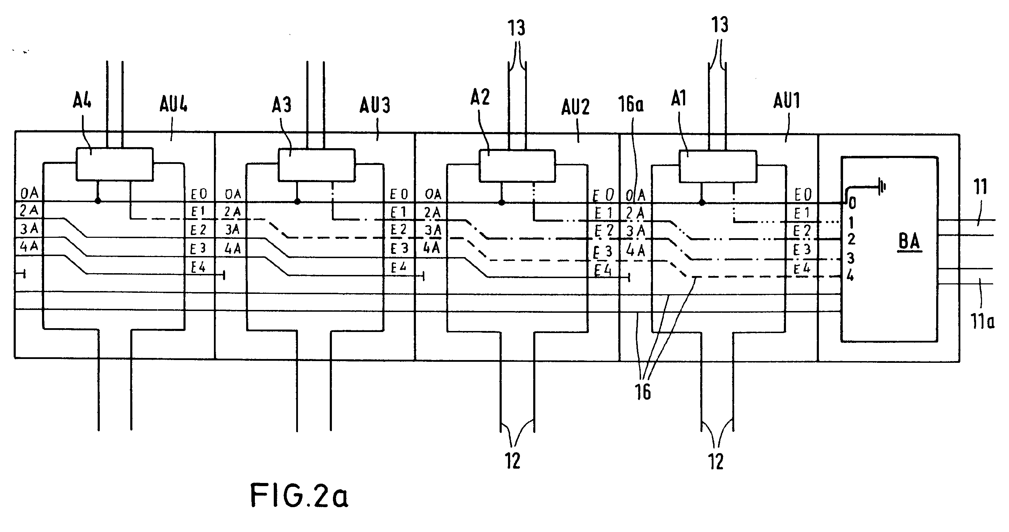

Die Anschlußeinrichtung nach Fig. 1 und 2 weist eine Busankopplungseinheit BA auf, die in einem Gehäuse 10 untergebracht ist, welches an einer Wand befestigt werden kann. Die Busankopplungseinheit BA ist an eine Datenleitung 11 anschließbar, bei der es sich um einen Datenbus handeln kann, der zahlreiche Busankopplungseinheiten BA untereinander verbindet. Die Leitung 11a stellt eine zur nächstfolgenden Busankopplungseinheit weiterführende Verlängerung der Datenleitung 11 dar. Die Leitungen 11a und 11b sind jeweils zweiadrig. Die Busankopplungseinheit BA kommuniziert mit einer Zentrale oder mit anderen Busankopplungseinheiten in der Weise, wie dies in EP 0 344 609 A2 beschrieben ist. Sie enthält einen Mikroprozessor für den Austausch von Telegrammen. Bei der Installation des Hausleitsystems in einem Gebäude ist es zunächst nur erforderlich, das Datenleitungsnetz zusammen mit den Busanschlußstellen BA zu installieren. Die Busanschlußstellen BA sind von ihrem elektrischen Aufbau her sämtlich untereinander gleich ausgebildet. Jede Busanschlußstelle BA wird mit mindestens einer Adaptereinheit AU gekoppelt. Die Adaptereinheit AU ist auf die jeweils auszuführende Funktion abgestimmt. Beispielsweise enthält sie einen Schalter, der imstande ist, einen Verbraucher an das elektrische Versorgungsnetz anzuschalten. In Fig. 2 sind die Leitungen 12 Netzleitungen, über die jeweils ein Adapter A1,A2 ... an das Versorgungsnetz angeschlossen ist. Der Adapter ist in diesem Fall ein einfacher Schalter, der über Leitungen 13 mit einem elektrischen Gerät, z.B. einer Leuchte, verbunden ist. Über die Datenleitung 11 kann der Befehl ankommen, daß der Adapter A2 das angeschlossene Gerät einschalten (oder abschalten) soll. Dieser Befehl wird zunächst von der Busankopplungseinheit BA empfangen und erkannt und dann so aufbereitet, daß der Adapter A2 in der Adaptereinheit AU2 entsprechend gesteuert wird.

Bei dem vorliegenden Ausführungsbeispiel sind insgesamt vier Adaptereinheiten AU1,AU2,AU3 und AU4 an die Busankopplungseinheit BA angeschlossen. Die Adaptereinheiten sind in untereinander gleich aufgebauten Gehäusen 14 untergebracht, von denen jedes für die Aufputz-Montage geeignet ist. Jedes der Gehäuse 14 weist an seiner einen Stirnwand einen mehrpoligen Verbinder 15 und auf seiner entgegengesetzten Stirnwand einen hierzu komplementären mehrpoligen Verbinder auf. Dadurch können die Gehäuse 14 in einer Reihe gegeneinandergesetzt werden, wobei sie durch die Verbinder 15 untereinander verbunden werden.

Von der Busankopplungseinheit BA erstrecken sich insgesamt sieben Kommunikationsleitungen 16 durch alle Adaptereinheiten AU1 bis AU4 hindurch. Durch die Verbinder 15 sind die in den einzelnen Adaptereinheiten enthaltenen Abschnitte der Kommunikationsleitungen 16 untereinander verbunden.

Wie Fig. 2 zeigt, sind alle Adapter A1 bis A4 an eine gemeinsame Kommunikationsleitung 16a angeschlossen und zusätzlich ist jeder Adapter an eine ihm zugeordnete individuelle Kommunikationsleitung angeschlossen. Dadurch ist es möglich, die Adapter zu identifizieren. Die Busankopplungseinheit BA legt beispielsweise ein Signal an eine der individuellen Busankopplungsleitungen. Hierdurch wird einer der Adapter A1 bis A4 aufgerufen. Das Signal, das dieser Adapter entsprechend seinem Zustand an der gemeinsamen Leitung 16a liefert, wird von der Busankopplungseinheit BA erkannt und dem aufgerufenen Adapter zugeordnet. Wenn der Adapter ein einfacher Schalter ist, gibt das Signal den Schaltzustand an. Ein Schaltbefehl kann von der Busankopplungseinheit an einen bestimmten Adapter gegeben werden, indem dieser Schaltbefehl auf der dem Adapter zugeordneten individuellen Kommunikationsleitung übertragen wird. Zusätzlich zu den beschriebenen Kommunikationsleitungen kann über die Kommunikationsleitungen 16 auch die Gleichspannungsversorgung von der Busankopplungseinheit BA zu den Adaptern übertragen werden.

Jedes der Gehäuse 14 weist eine an einer Wand zu befestigende Grundplatte 17 und eine Schutzkappe 18 auf. An den Seitenwänden, welche sich zwischen den die Verbinder 15 enthaltenden Stirnwänden erstrecken, sind Kabeldurchführungen 19 für die Leitungen 12 und 13 vorgesehen, wobei die Netzleitungen 12 von der einen Seite und die zum externen Gerät führenden Leitungen 13 von der entgegengesetzten Seite in das Gehäuse 14 eingeführt sind.

Das Ausführungsbeispiel von Fig. 2a entspricht weitgehend dem ersten Ausführungsbeispiel, jedoch sind die Adaptereinheiten AU1-AU4 untereinander völlig gleich ausgebildet, so daß individuelle Ankopplungen des jeweiligen Adapters an die Kommunikationsleitungen entfallen. Mit dem Aufbau nach Fig. 2a ist es möglich, bei untereinander gleich aufgebauten Adaptereinheiten AU1-AU4 automatisch durch die Reihenfolge der Anordnung der Adaptereinheiten deren Adressierung festzulegen.

Jede Adaptereinheit AU4 hat an einer Seite eine Reihe von Eingängen, die mit E0,E1 ... E4 bezeichnet sind, und an der gegenüberliegenden Seite eine Reihe von Ausgängen, die mit 0A,2A ... 4A bezeichnet sind. Der Eingang E0 und der Ausgang 0A einer Adaptereinheit sind durch die Kommunikationsleitung 16a verbunden, die auch an den zugehörigen Adapter, z.B. A1, angeschlossen ist. Der Ausgang 0A einer Adaptereinheit ist mit dem zugehörigen Eingang E0 der nächstfolgenden Adaptereinheit verbunden. Auf diese Weise erstreckt sich die Kommunikationsleitung 16a wie bei dem ersten Ausführungsbeispiel über sämtliche Adaptereinheiten. Der Eingang E1 einer Adaptereinheit ist ausschließlich mit dem zugehörigen Adapter in dieser Adaptereinheit verbunden, nicht aber mit einem der Ausgänge. Der nächstfolgende Eingang E2 ist dagegen über eine Kommunikationsleitung 16 mit dem Ausgang 2A verbunden. Da es einen Ausgang 1A nicht gibt, ist der Ausgang 2A an derjenigen Stelle angeordnet, die dem Eingang E1 gegenüberliegt und an die der Eingang E1 der nächstfolgenden Adaptereinheit angeschlossen ist. In gleicher Weise ist der mit dem Eingang E3 verbundene Ausgang 3A an derjenigen Stelle angeordnet, die dem Eingang E2 gegenüberliegt und an der der Eingang E2 der nächstfolgenden Adaptereinheit angeschlossen wird. Entsprechendes gilt auch für diejenige Kommunikationsleitung, die den Eingang E4 mit dem Ausgang 4A verbindet. Der Eingang E4 einer Adaptereinheit ist in der vorgeordneten Adaptereinheit mit Massepotential verbunden.

Damit die Adaptereinheiten aneinandergesteckt werden können, haben die Kontaktelemente der Eingänge und die Kontaktelemente der Ausgänge die gleiche Teilung. Die Ausgänge sind, mit Ausnahme derjenigen der Kommunikationsleitung 16a, um ein Teilungsmaß gegenüber den Eingängen versetzt, und zwar zur Kommunikationsleitung 16a hin. Hierdurch lassen sich bei dem dargestellten Ausführungsbeispiel vier untereinander gleiche Adaptereinheiten in beliebiger Reihenfolge zusammenstecken und mit der Busankopplungseinheit BA verbinden, wobei der Anschluß 1 der Busankopplungseinheit BA automatisch mit dem Adapter A1, der Anschluß 2 mit dem Adapter A2, der Anschluß 3 mit dem Adapter A3 und der Anschluß 4 mit dem Adapter A4 verbunden wird. Auf diese Weise erfolgt die Verteilung der Adressen an die Adapter A1 bis A4 in der Reihenfolge des Aneinandersteckens, d.h. die an die Busankopplungseinheit BA angesteckte Adaptereinheit AU1 erhält die Adresse "1", die an die Adaptereinheit AU1 angesteckte Adaptereinheit AU2 erhält die Adresse "2", usw. Verwechslungen und dadurch verursachte Fehlfunktionen sind ausgeschlossen. Sämtliche Adaptereinheiten vom gleichen Typ haben untereinander gleichen Aufbau, wodurch der Lager- und Herstellungsaufwand verringert und der Installationsaufwand vereinfacht wird, da keine zusätzlichen Kodierungsmaßnahmen erforderlich sind.

In der Praxis lassen sich die in Fig. 2a dargestellten Leitungen auf jeweils einer Leiterplatine als gedruckte Leiterbahnen herstellen. Die Leiterplatine kann dann auch den zugehörigen Adapter tragen.

Der beschriebene Verlauf der Leiterbahnen in miteinander verbindbaren Adaptereinheiten ist auch bei den nachfolgend noch zu beschreibenden Ausführungsbeispielen möglich.

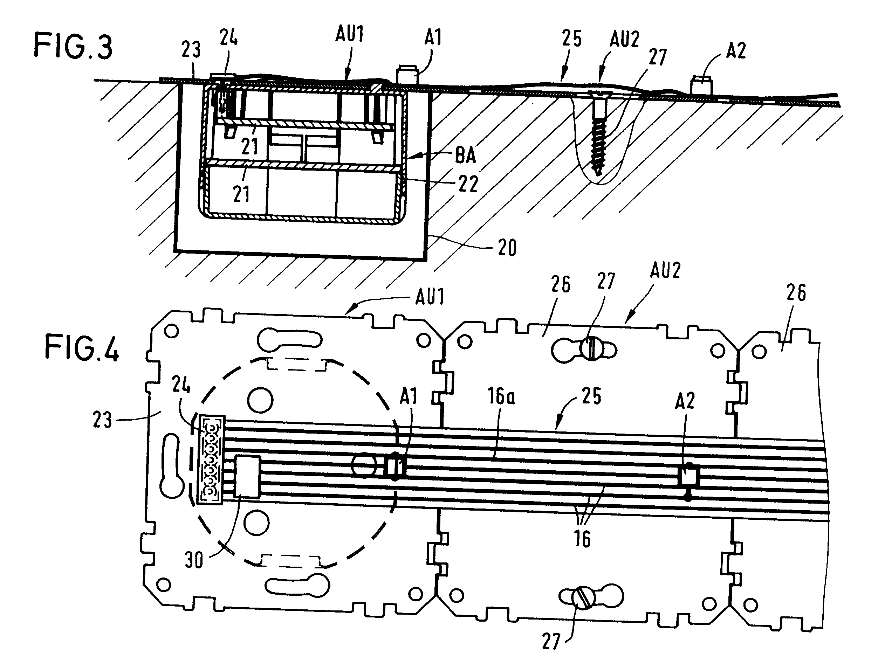

Bei dem Ausführungsbeispiel der Fign. 3-6 ist in einer in eine Wand eingelassenen Installationsdose 20 die Busankopplungseinheit BA angeordnet, die auf Leiterplatten 21 montiert ist, welche an einem Halter 22 angebracht sind. Der Halter 22 ist an einer Montageplatte 23 befestigt, die, wie bei Netzinstallationen üblich, vor die Öffnung der Installationsdose 20 gesetzt ist. Die Busankopplungseinheit BA ist mit einer (nicht dargestellten) Datenleitung verbunden, die in der Wand verlegt ist. Ihre Anschlüsse sind zu einem mehrpoligen Verbinder 24 geführt, der durch die Montageplatte 23 hindurchragt und auf der Vorderseite der Montageplatte mit einem Leitungszug 25 verbunden ist. Der Leitungszug 25 besteht aus einer mehradrigen flexiblen Streifenleitung mit parallelen Leiterstreifen, die als Kommunikationsleitungen 16 dienen.

Wie aus den Fign. 3 und 4 hervorgeht, sind neben der Montageplatte 23, die die Öffnung der Installationsdose 20 bedeckt, noch weitere Montageplatten 26 angeordnet, die flach auf der Wand aufliegen. Die in einer Reihe angeordneten Montageplatten 23,26 stoßen mit ihren Seitenrändern aneinander und greifen dort mit Verzahnungen ineinander ein, um bei der Wandmontage das Ausrichten zu erleichtern.

Jede Montageplatte 26 ist mit Schrauben 27 unmittelbar an der Wand anliegend befestigt. Die Montageplatte trägt auf ihrer der Wand abgewandten Vorderseite einen Adapter A2 ..., bei dem es sich beispielsweise um einen Mikroschalter handelt. Diese Adapter sind über oder seitlich neben dem Leitungszug 25 montiert. Sie weisen jeweils ein Bein auf, das mit der gemeinsamen Kommunikationsleitung 16a verbunden ist und ein weiteres Bein, das mit einer individuellen Kommunikationsleitung verbunden ist.

Die erste Adaptereinheit A1 ist gemeinsam mit der Busankopplungseinheit BA an derselben Montageplatte 23 angebracht. Während die Busankopplungseinheit BA mit dem Halter 22 hinter der Montageplatte 23 befestigt ist, befindet sich der Adapter A1 an der Vorderseite der Montageplatte 23.

Die Adapter A1,A2 ... sind bei dem vorliegenden Ausführungsbeispiel Mikroschalter, deren Schaltzustände von der Busankopplungseinheit BA abgetastet werden und die dazu bestimmt sind, entfernt angeordnete Verbraucher zu steuern. Die Busankopplungseinheit liefert die Zustandssignale dieser Schalter über das Datennetz an eine andere Anschlußeinrichtung, die daraufhin den zugehörigen Verbraucher ein- oder abschaltet. Wie erkennbar ist, benötigen derartige nur als Niederspannungsschalter wirkende Adapter wie die Adapter des Ausführungsbeispiels der Fign. 3-6 keinen Netzanschluß. Wenn ein Netzanschluß erforderlich ist, können die betreffenden Adaptereinheiten sich hinter die jeweilige Montageplatte in eine Installationsdose hinein erstrecken.

Der Anschluß der Adapter A1,A2 ... erfolgt dadurch, daß diese Adapter mit ihren spitzen Anschlußbeinen durch die Kunststoffumhüllung des Leitungszuges 25 hindurch in die Leiterbahnen eingestochen werden und dadurch Kontakt mit der jeweiligen Leiterbahn erhalten. Der Leitungszug 25 erstreckt sich ohne Unterbrechung über die gesamte Reihe der Anschlußeinheiten AU1,AU2 ... hinweg.

In der ersten Adaptereinheit AU1, die mit der Busankopplungseinheit BA an derselben Montageplatte 23 angebracht ist, ist unmittelbar hinter dem Verbinder 24 eine Selektionsvorrichtung 30 am Anfang des Leitungszuges 25 vorgesehen. Die Selektionsvorrichtung 30 enthält ein Schieberegister, über das, gesteuert von der Busankopplungseinheit BA, die den einzelnen Adaptern A1,A2 ... zugeordneten Kommunikationsleitungen 16 aufrufbar sind, um den Schaltzustand über die Leitung 16a abzufragen. Die Selektionsvorrichtung 30 bewirkt also eine Multiplex-Abfrage der einzelnen Adapter, wodurch die Zahl der benötigen Kommunikationsleitungen verkleinert wird.

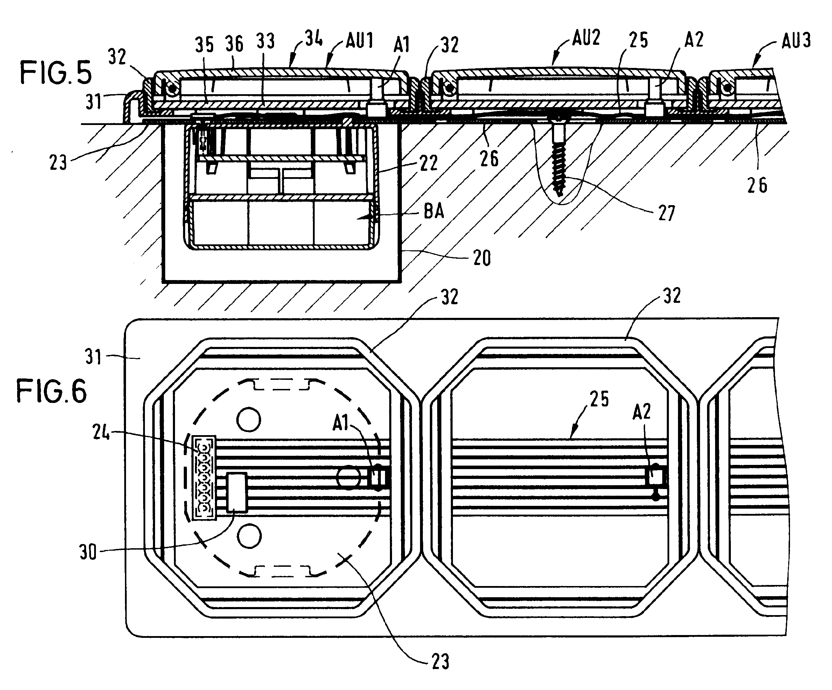

Wie die Fign. 5 und 6 zeigen, ist über den Montageplatten 23,26 ein Blendrahmen 31 angebracht, wie er in der Installationstechnik bei Schalterkombinationen üblich ist. Der Blendrahmen 31 ist durch Rastmittel an den Montageplatten 23,26 verrastet. Dieser Blendrahmen enthält in jedem seiner Fenster einen rahmenförmigen Einsatz 32. Die Öffnung des Rahmens 32 ist mit einer Platte 33 verschlossen, die Bestandteil des Deckels 34 ist. Der Deckel 34 weist ferner eine um eine Achse 35 schwenkbare Klappe 36 auf.

Durch ein Loch der Platte 33 ragt der auf der Montageplatte 23 bzw. 26 befestigte Adapter A1,A2 ... hindurch bis gegen die Unterseite der Deckelklappe 36. Durch Drücken gegen die Deckelklappe 36 kann der Adapter, der im vorliegenden Fall als Mikroschalter ausgebildet ist, betätigt werden.

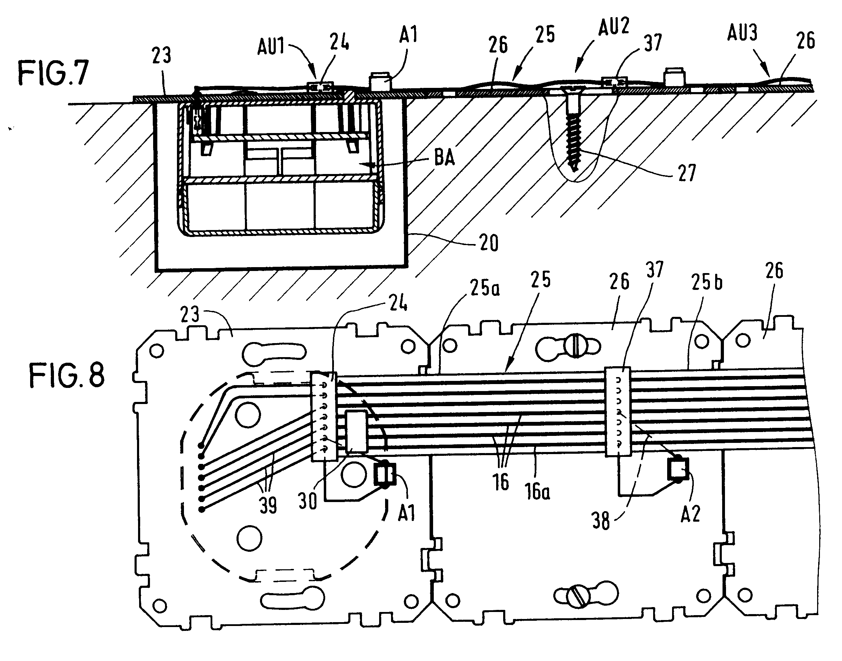

Das Ausführungsbeispiel der Fign. 7 und 8 unterscheidet sich von demjenigen der Fign. 4-6 nur in den nachfolgend erläuterten Merkmalen. Der Leitungszug 25 der Kommunikationsleitungen 16 besteht nicht aus einer über sämtliche Adaptereinheiten AU1,AU2 ... durchgehenden Bahn, sondern aus einzelnen Abschnitten 25a,25b, von denen jeder einer Adaptereinheit zugeordnet ist und die untereinander durch mehrpolige Verbinder 37 verbunden sind. Die Adapter A1 sind seitlich neben dem Leitungszug 25 angeordnet und jeweils über einen Draht 38 mit einem externen Anschluß des betreffenden Pols des Verbinders 37 verbunden. Der Leitungszug 25 kann somit aus beliebig vielen einzelnen Abschnitten 25a,25b ... zusammengesteckt werden, deren Länge jeweils der Länge einer Adaptereinheit entspricht. Die Verbinder 24 und 37 befinden sich im Mittelbereich der Länge einer Adaptereinheit, so daß die Abschnitte 25a,25b sich jeweils über die Grenze der Adaptereinheiten hinweg erstrecken.

Die Drähte 39 verbinden die unter der Montageplatte 23 befindliche Busankopplungseinheit BA mit dem auf der Montageplatte befestigten Verbinder 24.

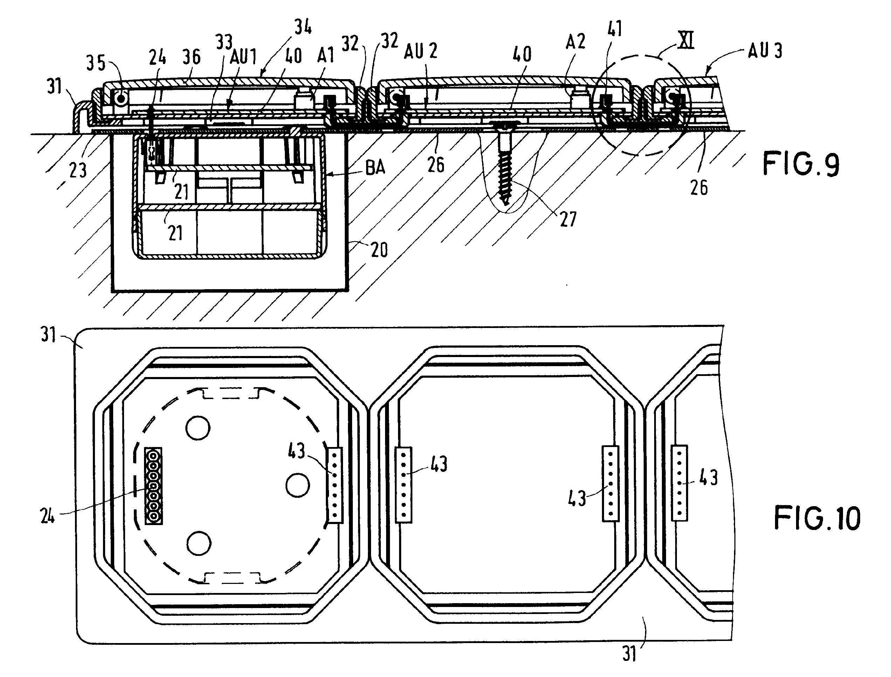

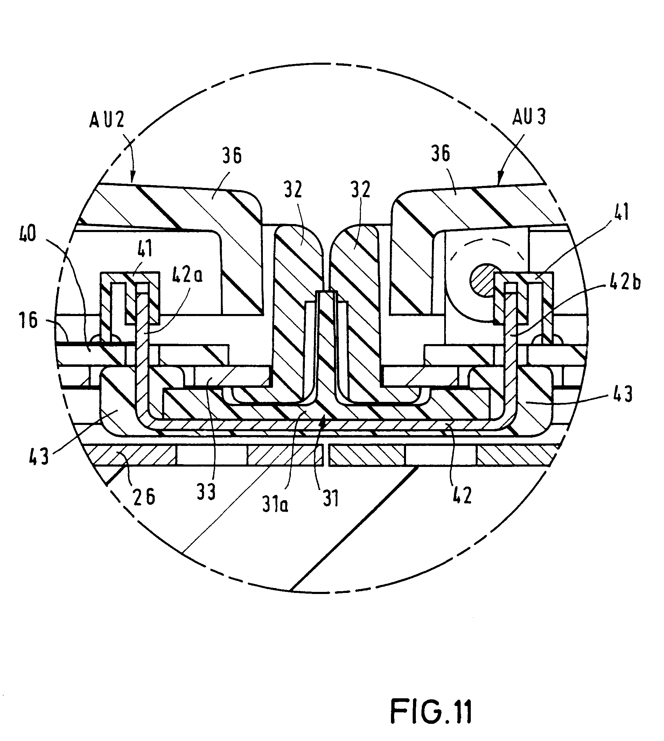

Das Ausführungsbeispiel der Fign. 9 bis 11 entspricht weitgehend denjenigen der Fign. 3 bis 6 und 7, 8, so daß die nachfolgende Beschreibung sich auf die Erläuterung der Unterschiede beschränkt.

Die Adapter A1,A2 sind jeweils Bestandteil einer Adaptereinheit AU1,AU2, die eine im Deckel 34 untergebrachte Leiterplatte 40 aufweist. Auf der Leiterplatte 40 ist der Adapter A1, im vorliegenden Fall ein Schalter, befestigt. Außerdem trägt die Leiterplatte 40 die Kommunikationsleitungen 16 in Form gedruckter Leiterbahnen. Die Leiterplatte 40 ist hier auf der Platte 30 des Deckels 34 befestigt und mit Steckverbindern versehen, um den Anschluß an die Verbinder 24 herzustellen. Die kompletten Adaptereinheiten AU1,AU2,AU3 sind in die Öffnungen des Blendrahmens 31 bzw. eines Einsatzes 32 einsetzbar. Sie können auch an oder auf den Montageplatten 23 bzw. 26 befestigt werden. Die Kommunikationsleitungen, die auf den Leiterplatten 40 verlaufen, sind mit Kontaktelementen 41 verbunden und sie sind zweckmäßigerweise so geführt wie die Kommunikationsleitungen 16 in Fig. 2a. Die Kontaktelemente 41 an dem einen Ende bilden die Eingänge und die Kontaktelemente 41 an dem gegenüberliegenden Ende bilden die Ausgänge der jeweiligen Adaptereinheit.

Im Blendrahmen 31 sind an den Rahmenstegen 31a, die zwei Rahmenfenster voneinander trennen, mehrpolige Brückenverbinder 42 angeordnet, die an jedem Ende eine Steckerleiste 43 aufweisen, welche in das zugehörige Blendrahmenfenster hineinragt und vorstehende Kontaktelemente 42a aufweist, welche mit den Kontaktelementen 41 der Leiterplatte 40 zusammengreifen. Die Kontaktelemente 42a ragen durch Öffnungen der Leiterplatte hindurch. Die im Inneren des abnehmbaren Deckels 34 befestigten Leiterplatten 40, die die Adaptereinheiten bilden, können somit in die Fenster des Blendrahmens 31 eingesteckt werden.

Die Brückenverbinder 42 sind an der Rückseite des Blendrahmens 31 angeordnet und durch Stecken, Rasten, Schrauben, Nieten oder Kleben befestigt und sie ragen mit ihren Steckelementen 42a und 42b senkrecht durch die Blendrahmenöffnungen.

Eine andere Möglichkeit besteht darin, die Brückenverbinder 42 in den Blendrahmen 31 zu integrieren, indem die erforderlichen Kontaktelemente in die Spritzgußform für den Blendrahmen eingelegt und anschließend mit Kunststoff umspritzt werden.

## Patentansprüche

1. Anschlußeinrichtung für die Hausleittechnik, mit einer mit einem Datenkabel (11) verbindbaren Busankopplungseinheit (BA), die einen Mikroprozessor enthält, und einer Adaptereinheit (AU1), die einen funktionsspezifischen Adapter (A1) enthält, der über mehrere interne Kommunikationsleitungen (16) mit der Busankopplungseinheit (BA) verbunden ist, **dadurch gekennzeichnet**, daß mindestens einige der Kommunikationsleitungen (16) durch die Adaptereinheit (AU1) hindurchgeführt sind und sich zu einer mit derselben Busankopplungseinheit (BA) kommunizierenden weiteren Adaptereinheit (AU2) erstrecken.

2. Anschlußeinrichtung nach Anspruch 1, dadurch gekennzeichnet, daß die Kommunikationsleitungen (16) zu einem sich über mehrere Adaptereinheiten (AU) erstreckenden mehradrigen Leitungszug (25) zusammengefaßt sind, dessen Adern für jeden Adapter (A1,A2) separat angezapft sind.

3. Anschlußeinrichtung nach Anspruch 1, dadurch gekennzeichnet, daß die Kommunikationsleitungen (16) in jeder Adaptereinheit (AU) an einen mehrpoligen Verbinder (15) angeschlossen sind, der mit den Kommunikationsleitungen (16) der angrenzenden Adaptereinheit verbindbar ist.

4. Anschlußeinrichtung nach Anspruch 3, dadurch gekennzeichnet, daß nur einige Pole des Verbinders (15) selektiv mit dem in der Adaptereinheit (AU) enthaltenen Adapter verbunden sind.

5. Anschlußeinrichtung nach einem der Ansprüche 1 bis 4, dadurch gekennzeichnet, daß die Busankopplungseinheit (BA) mit einer der Adaptereinheiten (AU1) in einem gemeinsamen Gehäuse oder einer Installationsdose (20) untergebracht ist.

6. Anschlußeinrichtung nach einem der Ansprüche 1 bis 5, dadurch gekennzeichnet, daß eine der Kommunikationsleitungen (16a) mit mehreren Adaptern (A1,A2 ...) verbunden ist, während andere Kommunikationsleitungen (16) jeweils selektiv mit einzelnen dieser mehreren Adapter (A1,A2 ...) verbunden sind.

7. Anschlußeinrichtung nach Anspruch 6, dadurch gekennzeichnet, daß in der der Busankopplungseinheit (BA) benachbarten oder diese Busankopplungseinheit enthaltenden ersten Adaptereinheit (AU1) eine von der Busankopplungseinheit (BA) gesteuerte Selektionsvorrichtung (30) vorgesehen ist, die einzelne Kommunikationsleitungen (16) nacheinander aktiviert und dadurch die Kommunikation mit den Adaptern zeitselektiv steuert.

8. Anschlußeinrichtung nach einem der Ansprüche 1 bis 7, dadurch gekennzeichnet, daß die Adaptereinheiten (AU1,AU2 ...) einzeln zusammensteckbare Gehäuse (14) aufweisen, die mit Verbindern (15) für die Kommunikationsleitungen (16) versehen sind.

9. Anschlußeinrichtung nach Anspruch 8, dadurch gekennzeichnet, daß zueinander komplementäre Verbinder (15) an entgegengesetzten Enden des Gehäuses (14) der Adaptereinheit (AU1,AU2 ...) angeordnet sind.

10. Anschlußeinrichtung nach einem der Ansprüche 1 bis 7, dadurch gekennzeichnet, daß die Adaptereinheiten (AU1,AU2 ...) jeweils eine für die Wandmontage vorgesehene Montageplatte (26) aufweisen, auf der ein Blendrahmen (31) und ein Deckel (34) montiert sind, und daß die Adapter (A1,A2 ...) auf der der Wand abgewandten Seite der flach gegen die Wand ansetzbaren Montageplatte (26) angeordnet sind.

11. Anschlußeinrichtung nach Anspruch 10, dadurch gekennzeichnet, daß eine der Adaptereinheiten (AU1) eine Halterung (22) für die Busankopplungseinheit (BA) aufweist.

12. Anschlußeinrichtung nach Anspruch 10 oder 11, dadurch gekennzeichnet, daß die Kommunikationsleitungen (16) auf der Vorderseite der Montageplatte (23,26) unter dem Blendrahmen (31) verlaufen.

13. Anschlußeinrichtung nach Anspruch 10 oder 11, dadurch gekennzeichnet, daß die Kommunikationsleitungen (16) auf einer Leiterplatte (40) angeordnet sind, welche Steckverbinder (41) für den Anschluß einer benachbarten gleichartigen Adaptereinheit durch Brückenverbinder (42) tragen.

14. Anschlußeinrichtung nach Anspruch 13, dadurch gekennzeichnet, daß die Brückenverbinder (42) an dem Blendrahmen (31) befestigt oder in diesen integriert sind.

15. Anschlußeinrichtung nach Anspruch 13 oder 14, dadurch gekennzeichnet, daß die Leiterplatte (40) den Adapter trägt.

16. Anschlußeinrichtung nach einem der vorhergehenden Ansprüche, dadurch gekennzeichnet, daß die Adaptereinheit (AU1 ... AU4) an einer Seite mehrere Eingänge (E0 ... E4) und an einer anderen Seite mehrere Ausgänge (0A ... 4A) aufweist und daß jeweils mindestens ein Eingang (E0) nur mit dem Adapter (A1 ... A4) dieser Adaptereinheit verbunden ist, während mindestens einer der übrigen Eingänge (E2 ... E4) mit einem hierzu versetzt angeordneten Ausgang (2A ... 4A) verbunden ist, welcher sich an derjenigen Stelle befindet, die dem nur mit dem Adapter verbundenen Eingang (E1) zugeordnet ist.

## Claims

1. A connecting means for use in in-house information distribution network technology, comprising a bus coupling unit (BA) connectable to a data cable (11) and including a microprocessor, and an adapter unit (AU1) including a function-specific adapter (A1) which is connected to the bus coupling unit (BA) via several internal communication lines (16),
**characterized in**
that at least some of the communication lines (16) are routed through the adapter unit (AU1) and extend to a further adapter unit (AU2) communicating with the same bus coupling unit (BA).

2. The connecting means according to claim 1, characterized in that the communication lines (16) are combined to a multiwire line section (25) extending over several adapter units (AU), whose wires are separately tapped for each adapter (A1,A2).

3. The connecting means according to claim 1, characterized in that in each adapter unit (AU), the communication lines (16) are connected to a multipin connector (15) which is connectable to the communiction lines (16) of the adjacent adapter unit.

4. The connecting means according to claim 3, characterized in that only some terminals of the connector (15) are selectively connected to the adapter included in the adapter unit (AU).

5. The connecting means according to one of claims 1 to 4, characterized in that the bus coupling unit (BA), together with one of the adapter units (AU1), is accommodated in a common housing or installation box (20).

6. The connecting means according to one of claims 1 to 5, characterized in that one of the communication lines (16a) is connected to several adapters (A1,A2 ...), while other communication lines (16) are selectively connected with single ones of these several adapters (A1,A2 ...), respectively.

7. The connecting means according to claim 6, characterized in that in the first adapter unit (AU1) adjacent to the bus coupling unit (BA) or including this bus coupling unit, a selection device (30) controlled by the bus coupling unit (BA) is provided, which sequentially activates individual communication lines and thus time-selectively controls the communication with the adapters.

8. The connecting means according to one of claims 1 to 7, characterized in that the adapter units (AU1,AU2 ...) comprise housings (14) adapted to be individually plugged together and being provided with connectors (15) for the communication lines (16).

9. The connecting means according to claim 8, characterized in that connectors (15) complementary to each other are arranged at opposite ends of the housing (14) of the adapter unit (AU1,AU2 ...).

10. The connecting means according to one of claims 1 to 7, characterized in that each adapter unit (AU1,AU2) comprises a mounting plate (26) provided for wall mounting on which a cover frame (31) and a lid (34) are mounted, and that the adapters (A1,A2 ...) are arranged on the side of the mounting plate (26) facing away from the wall, which mounting plate can be put flatly against the wall.

11. The connecting means according to claim 10, characterized in that one of the adapter units (AU1) comprises a holding device (22) for the bus coupling unit (BA).

12. The connecting means according to claim 10 or 11, characterized in that the communication lines (16) extend on the front face of the mounting plate (23,26) under the cover frame (31).

13. The connecting means according to claim 10 or 11, characterized in that the communication lines (16) are arranged on a circuit board (40) carrying plug connectors (41) for connecting an adjacent similar adapter unit by means of bridge connectors (42).

14. The connecting means according to claim 13, characterized in that the bridge connectors (42) are fastened to the cover frame (31) or integrated therein.

15. The connecting means according to claim 13 or 14, characterized in that the circuit board (40) carries the adapter.

16. The connecting means according to one of the preceding claims, characterized in that the adapter unit (AU1 ... AU4) comprises several inputs (E0 ... E4) at one side and several outputs (0A ... 4A) at another side, and that at least one input (E0), respectively, is only connected to the adapter (A1 ... A4) of this adapter unit, while at least one of the remaining inputs (E2 ... E4) is connected to an output (2A ... 4A) offset therefrom located at that position allocated to the input (E1) which is only connected to the adapter.

## Revendications

1. Unité de connexion pour installations domestiques, composée d'une unité d'accouplement formant bus (BA), qui peut être reliée à un câble de données (11) et qui comprend un microprocesseur, et d'une unité d'adaptation (AU1) comprenant un adaptateur à fonction spécifique (A1) qui est relié à l'unité d'accouplement formant bus (BA) par plusieurs lignes internes de communication (16), caractérisée en ce qu'au moins certaines des lignes de communication (16) traversent l'unité d'adaptation (AU1) et s'étendent jusqu'à une autre unité d'adaptation (AU2) communiquant avec la même unité d'accouplement formant bus (BA).

2. Unité de connexion selon la revendication 1, caractérisée en ce que les lignes de communication (16) sont regroupées sous la forme d'un faisceau de lignes multiconducteur (25) qui traverse plusieurs unités d'adaptation (AU) et dont les conducteurs comportent des prises séparées pour chaque adaptateur (A1, A2).

3. Unité de connexion selon la revendication 1, caractérisée en ce que les lignes de communication (16) de chaque unité d'adaptation (AU) sont reliées à un connecteur multipolaire (15) qui peut être relié aux lignes de communication (16) de l'unité d'adaptation voisine.

4. Unité de connexion selon la revendication 3, caractérisée en ce que seuls quelques-uns des pôles du connecteur (15) sont reliés sélectivement à l'adaptateur contenu dans l'unité d'adaptation (AU).

5. Unité de connexion selon les revendications 1 à 4, caractérisée en ce que l'unité d'accouplement formant bus (BA) est logée, avec l'une des unités d'adaptation (AU1), dans un boîtier commun ou dans une prise d'installation (20).

6. Unité de connexion selon l'une des revendications 1 à 5, caractérisée en ce que l'une des lignes de communication (16a) est reliée à plusieurs adaptateurs (A1, A2 ...), tandis que d'autres lignes de communication (16) sont chacune reliées sélectivement à certains de cette pluralité d'adaptateurs (A1, A2 ...).

7. Unité de connexion selon la revendication 6, caractérisée en ce qu'il est prévu, dans la première unité d'adaptation (AU1) qui est voisine de l'unité d'accouplement formant bus (BA) ou qui contient cette unité d'accouplement formant bus, un dispositif de sélection (30) qui est commandé par l'unité d'accouplement formant bus (BA) et qui active successivement des lignes de communication individuelles (16) et commande ainsi la communication avec les adaptateurs de manière sélective dans le temps.

8. Unité de connexion selon l'une des revendications 1 à 7, caractérisée en ce que les unités d'adaptation (AU1, AU2 ...) comportent des boîtiers (14) qui peuvent être assemblés les uns aux autres par enfichage et qui sont munis de connecteurs (15) pour les lignes de communication (16).

9. Unité de connexion selon la revendication 8, caractérisée en ce que des connecteurs (15) complémentaires entre eux sont disposés à des extrémités opposées du boîtier (14) de l'unité d'adaptation (AU1, AU2 ...).

10. Unité de connexion selon l'une des revendications 1 à 7, caractérisée en ce que les unités d'adaptation (AU1, AU2 ...) comportent chacune une plaque de pose (26) qui est prévue pour la pose murale et sur laquelle sont montés un cadre de parement (31) et un couvercle (34), et en ce que les adaptateurs (A1, A2 ...) sont disposés sur le côté, opposé au mur, de la plaque de pose (26) appliquée à plat contre le mur.

11. Unité de connexion selon la revendication 10, caractérisée en ce que l'une des unités d'adaptation (AU1) comporte un support (22) pour l'unité d'accouplement formant bus (BA).

12. Unité de connexion selon la revendication 10 ou 11, caractérisée en ce que les lignes de communication (16) passent sur le côté avant de la plaque de pose (23, 26), sous le cadre de parement (31).

13. Unité de connexion selon la revendication 10 ou 11, caractérisée en ce que les lignes de communication (16) sont disposées sur une plaquette imprimée (40) qui porte des connecteurs enfichables (41) destinés à relier une unité d'adaptation voisine de même type au moyen de connecteurs formant ponts (42).

14. Unité de connexion selon la revendication 13, caractérisée en ce que les connecteurs formant ponts (42) sont fixés au cadre de parement (31) ou y sont intégrés.

15. Unité de connexion selon la revendication 13 ou 14, caractérisée en ce que la plaquette imprimée (40) porte l'adaptateur.

16. Unité de connexion selon l'une des revendications précédentes, caractérisée en ce que l'unité d'adaptation (AU1 ... AU4) comporte, sur l'un de ses côtés, plusieurs entrées (E0 ... E4) et, sur son autre côté, plusieurs sorties (0A ... 4A), et en ce qu'au moins une entrée (E0) n'est reliée qu'à l'adaptateur (A1 ... A4) de l'unité d'adaptation correspondante, tandis qu'au moins une des autres entrées (E2 ... E4) est reliée à une sortie (2A ... 4A) qui est décalée par rapport à elle et qui se trouve à l'endroit affecté à l'entrée (E1) uniquement reliée à l'adaptateur.
